# EUROPEAN PATENT SPECIFICATION

(11) **EP 3 654 780 B1**
(45) Date of publication and mention of the grant of the patent: **28.10.2026**
(21) Application number: 18829798.0
(22) Date of filing: 17.12.2018
(51) Int. Cl.: A23L 27/00, A23L 27/10, A23L 2/56, A23L 2/68

(54) **SOURNESS ENHANCERS COMPRISING A CYCLOHEXANECARBOXYLIC ACID**
EINE CYCLOHEXANCARBONSÄURE ENTHALTENDE SAUERGESCHMACKSVERSTÄRKER
AMPLIFICATEURS D'ACIDIFICATION COMPRENANT UN ACIDE CYCLOHEXANECARBOXYLIQUE

(30) Priority: 22.12.2017 WO PCT/CN2017/117901
(43) Date of publication of application: 27.05.2020
(73) Proprietor: Firmenich SA, 1211 Geneva 8 (CH)
(72) Inventor: GAN, Xian-Wen, SHANGHAI, 201108 (CN); YIN, Dan-Ting, SHANGHAI, 201108 (CN); HAEFLIGER, Olivier, 1211 GENEVA 8 (CH); CHEN, Ting, SHANGHAI, 200237 (CN)
(74) Representative: Strych, Sebastian
(86) International application number: PCT/EP2018/085280
(87) International publication number: WO 2019/121551

(56) References cited:
- EP-A1- 1 552 756
- WO-A1-2014/145256
- US-A1- 2008 311 271
- US-A1- 2016 366 915

## Description

### CROSS-REFERENCE TO RELATED APPLICATIONS

The present application claims priority to International Patent Application Serial No. PCT/CN2017/117901, filed on December 22, 2018.

### FIELD OF THE INVENTION

The various aspects presented herein relate to the use of cyclohexanecarboxylic acids in flavored articles to enhance, improve, or modify their sour taste.

### BACKGROUND

Flavor modifiers are substances added to supplement, enhance, or modify the original flavor of a flavored article. Flavor is defined as the combined perception of taste, smell or aroma and chemical feeling factors. The perception of flavor is a result of the chemical stimulation of receptors in both the oral and nasal cavities. The basic tastes are sweet, sour, salty and bitter. Umami, described as another basic taste, enhances the taste effect of other ingredients and components of the flavor profile. These basic tastes, including Umami and certain trigeminal effects are perceived in the buccal cavity. Aroma may be the smell emanating from food before it is consumed or the flavor perceived while chewing and swallowing a product.

Flavor and/or aroma modifiers may be added to foods (including beverages), personal or household care products, pharmaceutical preparations, or other compositions to increase acceptance of products by enhancing desirable flavors and/or aromas or by masking or eliminating undesirable attributes. Flavor modifiers may be used to alter the taste and/or aroma of ingestible foods, nutraceuticals and pharmaceuticals, as well as oral and personal care products (e.g., mouthwash, toothpaste, cosmetics, perfumes and the like), or products that may be found in and around homes, businesses, and the like.

It has long been a goal to improve the quality of food products and to provide new and different flavor and aroma sensations to such products. Commercial production of foods expected to have a relatively long shelf-life often requires the use of processing conditions, storage conditions and/or addition of ingredients that may produce undesirable off-tastes in the food compositions. Typical solutions to taste problems are ineffective often due to the high cost of ingredients and manufacturing. The use of flavor modifiers could eliminate or substantially reduce the undesirable off-tastes in food compositions as well as improve the overall taste perception of the food and/or provide new and novel taste experiences. Accordingly, it would be desirable to supply a flavor modifier that could provide such flavor improvements and novelty to foods and preferably contribute these benefits in a cost effective manner.

EP 1552756 shows in claim 1 a beverage comprising the following ingredients (a), (b) and (c): (a) 0.05 to 10 % by weight of a chlorogenic acids family mixture comprising isochlorogenic acids wherein the weight ratio of said isochlorogenic acids is from 1/20 to 1/3 of the chlorogenic acids mixture; (b) a hydroxycarboxylic acid in a quantity ranging (1) from 5 to 30 times the weight content of said ingredient (a) and (2)from 0.25 to 15 % by weight of the beverage, and/or vegetable-derived or fruit-derived flavor substance in a quantity ranging (1)from 0.1 to 30 times the weight of said ingredient (a) and(2) from 0.25 to 15 % by weight of the beverage; and (c) 30 to 99.7 % by weight of water.

US 2008/0311271 A1 shows in claim 1 A container-packed coffee beverage containing the following constituents (A), (B) and (C): (A) Peak [alpha] constituent (B) Peak [beta] constituent (C) chlorogenic acids wherein the peak area ratio of constituent (A) appearing in a retention time of 2.0 to 2.3 minutes and constituent (B) appearing in a retention time of 2.7 to 3.2 minutes on a chromatogram obtained by constituent analysis of a coffee extract at a detection wavelength of 260 nm using a high performance liquid chromatography apparatus is {(A)/(B)}*100=30 to 100, and the content ratio of 5-caffeoylquinic acid within the constituent (C) is 28.0 to 35.0% by weight.

### SUMMARY

The invention pertains to the claims. One aspect presented herein, provides a method, wherein the method enhances the sourness of a flavored article, wherein the method comprises the step of adding a botanical extract selected from the group consisting of green coffee bean extract, honeysuckle flower extract, and eucommia bark extract to the flavored article, wherein the flavored article contains at least one acid selected from the group consisting of: malic acid, tartaric acid, citric acid, and lactic acid, wherein the amount of the at least one acid in the flavored article is from 0.02% to 0.1 % by weight, wherein the botanical extract contains at least one cyclohexanecarboxylic acid, wherein the botanical extract is added in an amount sufficient to result in an olfactory effective amount of at least one cyclohexanecarboxylic acid in the flavored article, and wherein the olfactory effective amount of the at least one cyclohexanecarboxylic acid is from 0.1 to 1000 ppm in the flavored article.

One aspect presented herein, provides the use of cyclohexanecarboxylic acid to enhance the sourness of a flavored article, wherein the use comprises the step of adding an olfactory effective amount of at least one cyclohexanecarboxylic acid to the flavored article, wherein the flavored article contains at least one acid selected from the group consisting of: malic acid, tartaric acid, citric acid, and lactic acid, wherein the amount of the at least one acid in the flavored article is from 0.02% to 0.1% by weight, and wherein the olfactory effective amount of the at least one cyclohexanecarboxylic acid is from 0.1 to 1000 ppm in the flavored article.

In one aspect, the at least one cyclohexanecarboxylic acid is obtained from a botanical extract selected from the group consisting of green coffee bean extract, honeysuckle flower extract, and eucommia bark extract.

In one aspect, the at least one cyclohexanecarboxylic acid is selected from the group consisting of 5-caffeoylquinic acid (5-CQA), 3-caffeoylquinic acid (3-CQA), 4-caffeoylquinic acid (4-CQA), 3,4-dicaffeoylquinic acid (3,4-diCQA), 3,5-dicaffeoylquinic acid (3,5-diCQA), 4,5-dicaffeoylquinic acid (4,5-diCQA), 3-feruloylquinic acid (3-FQA), 4-feruloylquinic acid (4-FQA), 5-feruloylquinic acid (5-FQA), 3-p-coumaroylquinic acid (3-p-CoQA), 4-p-coumaroylquinic acid (4-p-CoQA), 5-p-coumaroylquinic acid (3-p-CoQA), 3,4-caffeoylferuloylquinic acid (3,4-CFQA), 3,4-feruloylcaffeoylquinic acid (3,4-FCQA), 3,5-caffeoylferuloylquinic acid (3,5-CFQA), 3,5-feruloylcaffeoylquinic acid (3,4-FCQA), 4,5-caffeoylferuloylquinic acid (4,5-CFQA), 4,5-feruloylcaffeoylquinic acid (4,5-FCQA), and combinations thereof.

In one aspect, the at least one cyclohexanecarboxylic acid is 5-caffeoylquinic acid.

The olfactory effective amount of the at least one cyclohexanecarboxylic acid is from 0.1 to 1000 ppm in the flavored article.

### DETAILED DESCRIPTION

In the following description, reference is made to specific embodiments which may be practiced, which is shown by way of illustration. These embodiments are described in detail to enable those skilled in the art to practice the invention described herein, and it is to be understood that other embodiments may be utilized and that logical changes may be made without departing from the scope of the aspects presented herein. The following description of example embodiments is, therefore, not to be taken in a limited sense, and the scope of the various aspects presented herein is defined by the appended claims.

The Abstract is provided to comply with 37 C.F.R. §1.72(b) to allow the reader to quickly ascertain the nature and gist of the technical disclosure. The Abstract is submitted with the understanding that it will not be used to interpret or limit the scope or meaning of the claims.

It has been surprisingly discovered that the addition of at least one cyclohexanecarboxylic acid to a flavored article can enhance the sourness of a flavored article, when the flavored article contains an acid. Non-limiting examples of the acid include malic acid, tartaric acid, citric acid, lactic acid, vitamin C, acetic acid, formic acid, oxalic acid, phosphoric acid, succinic acid, fumaric acid, ketoglutaric acid, propionic acid, pyruvic acid and combinations thereof.

As used herein, the term "olfactory effective amount" refers to the amount of the at least one cyclohexanecarboxylic acid, when present in a flavored article, that enhances the sourness of the flavored article.

In some aspects, the at least one cyclohexanecarboxylic acid may comprise an extract obtained from a variety of botanicals such as fruits (for example, apples, apricots, blackberries, blueberries, cherries, citrus fruits, peaches, pears, plums and strawberries), plant leaves (for example, blueberry, mate, stevia or eucommia leaves), vegetables (for example, artichokes, Brussels sprouts, cabbages, carrots, eggplants, kales, peppers, potatoes and tomatoes) and other plants (for example, bamboos, coffee beans, honeysuckle flowers, sunflower seeds and yerba mate).

The botanical extract can be obtained commercially, or isolated or generated according to procedures known in the art, for example, as described by Farah et al., J. Nutr. December 2008, vol. 138 no. 12, 2309-2315, or Upadhyay et al., Crit. Rev. Food. Sci. Nutr., 2013, Vol. 53, 968-984, or Li et al., Medicinal Plant, 2014, Vol. 5, 4-7.

Accordingly, some aspects presented herein provide a method, wherein the method enhances the sourness of a flavored article, wherein the method comprises the step of adding a botanical extract to the flavored article, wherein the flavored article contains at least one acid selected from the group consisting of: malic acid, tartaric acid, citric acid, and lactic acid, wherein the plant extract contains at least one cyclohexanecarboxylic acid, wherein the botanical extract is added in an amount sufficient to result in an olfactory effective amount of at least one cyclohexanecarboxylic acid in the flavored article.

In some aspects, the botanical extract is selected from the group consisting of green coffee bean extract, honeysuckle flower extract, and eucommia bark extract.

Some aspects presented herein, provide a method, wherein the method enhances the sourness of a flavored article, wherein the method comprises the step of adding an olfactory effective amount of at least one cyclohexanecarboxylic acid to the flavored article, wherein the flavored article contains at least one acid.

Without intending to be limited to any particular theory, the enhancement of sourness may be quantitated using a model system. One example of a model system comprises a 5% sucrose solution comprising from 0.02% to 0.1 % by weight of the at least one acid.

In some aspects, the model system comprises from 0.02 to 0.09% by weight of the at least one acid. In some aspects, the model system comprises from 0.02 to 0.08% by weight of the at least one acid. In some aspects, the model system comprises from 0.02 to 0.07% by weight of the at least one acid. In some aspects, the model system comprises from 0.02 to 0.06% by weight of the at least one acid. In some aspects, the model system comprises from 0.02 to 0.05% by weight of the at least one acid. In some aspects, the model system comprises from 0.02 to 0.04% by weight of the at least one acid. In some aspects, the model system comprises from 0.02 to 0.03% by weight of the at least one acid.

In some aspects, the model system comprises from 0.03 to 0.09% by weight of the at least one acid. In some aspects, the model system comprises from 0.04 to 0.09% by weight of the at least one acid. In some aspects, the model system comprises from 0.05 to 0.09% by weight of the at least one acid. In some aspects, the model system comprises from 0.06 to 0.09% by weight of the at least one acid. In some aspects, the model system comprises from 0.07 to 0.09% by weight of the at least one acid. In some aspects, the model system comprises from 0.08 to 0.09% by weight of the at least one acid.

In some aspects, the model system comprises 0.02, or 0.03, or 0.04, or 0.05, or 0.06, or 0.07, or 0.08, or 0.09, or 0.10% by weight of the at least one acid.

Example 1 below describes the performance of a cyclohexanecarboxylic acid having the following structure: 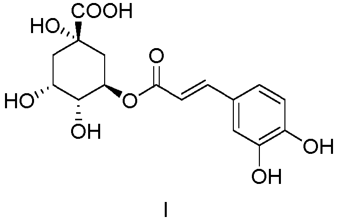 as a sourness enhancer in model systems.

In some aspects, the at least one cyclohexanecarboxylic acid is selected from the group consisting of 5-caffeoylquinic acid (5-CQA), 3-caffeoylquinic acid (3-CQA), 4-caffeoylquinic acid (4-CQA), 3,4-dicaffeoylquinic acid (3,4-diCQA), 3,5-dicaffeoylquinic acid (3,5-diCQA), 4,5-dicaffeoylquinic acid (4,5-diCQA), 3-feruloylquinic acid (3-FQA), 4-feruloylquinic acid (4-FQA), 5-feruloylquinic acid (5-FQA), 3-p-coumaroylquinic acid (3-p-CoQA), 4-p-coumaroylquinic acid (4-p-CoQA), 5-p-coumaroylquinic acid (3-p-CoQA), 3,4-caffeoylferuloylquinic acid (3,4-CFQA), 3,4-feruloylcaffeoylquinic acid (3,4-FCQA), 3,5-caffeoylferuloylquinic acid (3,5-CFQA), 3,5-feruloylcaffeoylquinic acid (3,4-FCQA), 4,5-caffeoylferuloylquinic acid (4,5-CFQA), 4,5-feruloylcaffeoylquinic acid (4,5-FCQA), and combinations thereof may also be tested in model systems. In some aspects, the at least one cyclohexanecarboxylic acid may be in the form of a enantiomer, or a diastereoisomer, or a mixture thereof.

Without intending to be limited to any particular theory, the ability of the at least one cyclohexanecarboxylic acid to enhance the sourness of a model system correlates with the ability of the at least one cyclohexanecarboxylic acid to enhance the sourness of a flavored article.

In some aspects, the flavored article comprises from 0.005% to 0.5% by weight of the at least one acid.

In some aspects, the flavored article comprises from 0.02 to 0.09% by weight of the at least one acid. In some aspects, the flavored article comprises from 0.02 to 0.08% by weight of the at least one acid. In some aspects, the flavored article comprises from 0.02 to 0.07% by weight of the at least one acid. In some aspects, the flavored article comprises from 0.02 to 0.06% by weight of the at least one acid. In some aspects, the flavored article comprises from 0.02 to 0.05% by weight of the at least one acid. In some aspects, the flavored article comprises from 0.02 to 0.04% by weight of the at least one acid. In some aspects, the flavored article comprises from 0.02 to 0.03% by weight of the at least one acid.

In some aspects, the flavored article comprises from 0.03 to 0.09% by weight of the at least one acid. In some aspects, the flavored article comprises from 0.04 to 0.09% by weight of the at least one acid. In some aspects, the flavored article comprises from 0.05 to 0.09% by weight of the at least one acid. In some aspects, the flavored article comprises from 0.06 to 0.09% by weight of the at least one acid. In some aspects, the flavored article comprises from 0.07 to 0.09% by weight of the at least one acid. In some aspects, the flavored article comprises from 0.08 to 0.09% by weight of the at least one acid.

In some aspects, the flavored article comprises 0.02, or 0.03, or 0.04, or 0.05, or 0.06, or 0.07, or 0.08, or 0.09, or 0.10% by weight of the at least one acid.

In some aspects, the at least one acid is selected from the group consisting of: malic acid, tartaric acid, citric acid, lactic acid, vitamin C, acetic acid, formic acid, oxalic acid, phosphoric acid, succinic acid, fumaric acid, ketoglutaric acid, propionic acid, pyruvic acid and combinations thereof.

In some aspects, the at least one acid is selected from the group consisting of: malic acid, tartaric acid, citric acid, lactic acid, and combinations thereof.

The olfactory effective amount of the cyclohexanecarboxylic acid is from 0.1 to 1000 ppm in the flavored article. In some aspects, the olfactory effective amount of the cyclohexanecarboxylic acid is from 0.1 to 900 ppm in the flavored article. In some aspects, the olfactory effective amount of the cyclohexanecarboxylic acid is from 0.1 to 800 ppm in the flavored article. In some aspects, the olfactory effective amount of the cyclohexanecarboxylic acid is from 0.1 to 700 ppm in the flavored article. In some aspects, the olfactory effective amount of the cyclohexanecarboxylic acid is from 0.1 to 600 ppm in the flavored article. In some aspects, the olfactory effective amount of the cyclohexanecarboxylic acid is from 0.1 to 500 ppm in the flavored article. In some aspects, the olfactory effective amount of the cyclohexanecarboxylic acid is from 0.1 to 400 ppm in the flavored article. In some aspects, the olfactory effective amount of the cyclohexanecarboxylic acid is from 0.1 to 300 ppm in the flavored article. In some aspects, the olfactory effective amount of the cyclohexanecarboxylic acid is from 0.1 to 200 ppm in the flavored article. In some aspects, the olfactory effective amount of the cyclohexanecarboxylic acid is from 0.1 to 100 ppm in the flavored article. In some aspects, the olfactory effective amount of the cyclohexanecarboxylic acid is from 0.1 to 90 ppm in the flavored article. In some aspects, the olfactory effective amount of the cyclohexanecarboxylic acid is from 0.1 to 80 ppm in the flavored article. In some aspects, the olfactory effective amount of the cyclohexanecarboxylic acid is from 0.1 to 70 ppm in the flavored article. In some aspects, the olfactory effective amount of the cyclohexanecarboxylic acid is from 0.1 to 60 ppm in the flavored article. In some aspects, the olfactory effective amount of the cyclohexanecarboxylic acid is from 0.1 to 50 ppm in the flavored article. In some aspects, the olfactory effective amount of the cyclohexanecarboxylic acid is from 0.1 to 40 ppm in the flavored article. In some aspects, the olfactory effective amount of the cyclohexanecarboxylic acid is from 0.1 to 30 ppm in the flavored article. In some aspects, the olfactory effective amount of the cyclohexanecarboxylic acid is from 0.1 to 20 ppm in the flavored article. In some aspects, the olfactory effective amount of the cyclohexanecarboxylic acid is from 0.1 to 10 ppm in the flavored article. In some aspects, the olfactory effective amount of the cyclohexanecarboxylic acid is from 0.1 to 9 ppm in the flavored article. In some aspects, the olfactory effective amount of the cyclohexanecarboxylic acid is from 0.1 to 8 ppm in the flavored article. In some aspects, the olfactory effective amount of the cyclohexanecarboxylic acid is from 0.1 to 7 ppm in the flavored article. In some aspects, the olfactory effective amount of the cyclohexanecarboxylic acid is from 0.1 to 6 ppm in the flavored article. In some aspects, the olfactory effective amount of the cyclohexanecarboxylic acid is from 0.1 to 5 ppm in the flavored article. In some aspects, the olfactory effective amount of the cyclohexanecarboxylic acid is from 0.1 to 4 ppm in the flavored article. In some aspects, the olfactory effective amount of the cyclohexanecarboxylic acid is from 0.1 to 3 ppm in the flavored article. In some aspects, the olfactory effective amount of the cyclohexanecarboxylic acid is from 0.1 to 2 ppm in the flavored article. In some aspects, the olfactory effective amount of the cyclohexanecarboxylic acid is from 0.1 to 1 ppm in the flavored article. In some aspects, the olfactory effective amount of the cyclohexanecarboxylic acid is from 0.1 to 0.9 ppm in the flavored article. In some aspects, the olfactory effective amount of the cyclohexanecarboxylic acid is from 0.1 to 0.8 ppm in the flavored article. In some aspects, the olfactory effective amount of the cyclohexanecarboxylic acid is from 0.1 to 0.7 ppm in the flavored article. In some aspects, the olfactory effective amount of the cyclohexanecarboxylic acid is from 0.1 to 0.6 ppm in the flavored article. In some aspects, the olfactory effective amount of the cyclohexanecarboxylic acid is from 0.1 to 0.5 ppm in the flavored article. In some aspects, the olfactory effective amount of the cyclohexanecarboxylic acid is from 0.1 to 0.4 ppm in the flavored article. In some aspects, the olfactory effective amount of the cyclohexanecarboxylic acid is from 0.1 to 0.3 ppm in the flavored article. In some aspects, the olfactory effective amount of the cyclohexanecarboxylic acid is from 0.1 to 0.2 ppm in the flavored article.

The olfactory effective amount of the cyclohexanecarboxylic acid is from 0.1 to 1000 ppm in the flavored article. In some aspects, the olfactory effective amount of the cyclohexanecarboxylic acid is from 0.2 to 1000 ppm in the flavored article. In some aspects, the olfactory effective amount of the cyclohexanecarboxylic acid is from 0.3 to 1000 ppm in the flavored article. In some aspects, the olfactory effective amount of the cyclohexanecarboxylic acid is from 0.4 to 1000 ppm in the flavored article. In some aspects, the olfactory effective amount of the cyclohexanecarboxylic acid is from 0.5 to 1000 ppm in the flavored article. In some aspects, the olfactory effective amount of the cyclohexanecarboxylic acid is from 0.6 to 1000 ppm in the flavored article. In some aspects, the olfactory effective amount of the cyclohexanecarboxylic acid is from 0.7 to 1000 ppm in the flavored article. In some aspects, the olfactory effective amount of the cyclohexanecarboxylic acid is from 0.8 to 1000 ppm in the flavored article. In some aspects, the olfactory effective amount of the cyclohexanecarboxylic acid is from 0.9 to 1000 ppm in the flavored article. In some aspects, the olfactory effective amount of the cyclohexanecarboxylic acid is from 1 to 1000 ppm in the flavored article. In some aspects, the olfactory effective amount of the cyclohexanecarboxylic acid is from 2 to 1000 ppm in the flavored article. In some aspects, the olfactory effective amount of the cyclohexanecarboxylic acid is from 3 to 1000 ppm in the flavored article. In some aspects, the olfactory effective amount of the cyclohexanecarboxylic acid is from 4 to 1000 ppm in the flavored article. In some aspects, the olfactory effective amount of the cyclohexanecarboxylic acid is from 5 to 1000 ppm in the flavored article. In some aspects, the olfactory effective amount of the cyclohexanecarboxylic acid is from 6 to 1000 ppm in the flavored article. In some aspects, the olfactory effective amount of the cyclohexanecarboxylic acid is from 7 to 1000 ppm in the flavored article. In some aspects, the olfactory effective amount of the cyclohexanecarboxylic acid is from 8 to 1000 ppm in the flavored article. In some aspects, the olfactory effective amount of the cyclohexanecarboxylic acid is from 9 to 1000 ppm in the flavored article. In some aspects, the olfactory effective amount of the cyclohexanecarboxylic acid is from 10 to 1000 ppm in the flavored article. In some aspects, the olfactory effective amount of the cyclohexanecarboxylic acid is from 20 to 1000 ppm in the flavored article. In some aspects, the olfactory effective amount of the cyclohexanecarboxylic acid is from 30 to 1000 ppm in the flavored article. In some aspects, the olfactory effective amount of the cyclohexanecarboxylic acid is from 40 to 1000 ppm in the flavored article. In some aspects, the olfactory effective amount of the cyclohexanecarboxylic acid is from 50 to 1000 ppm in the flavored article. In some aspects, the olfactory effective amount of the cyclohexanecarboxylic acid is from 60 to 1000 ppm in the flavored article. In some aspects, the olfactory effective amount of the cyclohexanecarboxylic acid is from 70 to 1000 ppm in the flavored article. In some aspects, the olfactory effective amount of the cyclohexanecarboxylic acid is from 80 to 1000 ppm in the flavored article. In some aspects, the olfactory effective amount of the cyclohexanecarboxylic acid is from 90 to 1000 ppm in the flavored article. In some aspects, the olfactory effective amount of the cyclohexanecarboxylic acid is from 100 to 1000 ppm in the flavored article. In some aspects, the olfactory effective amount of the cyclohexanecarboxylic acid is from 200 to 1000 ppm in the flavored article. In some aspects, the olfactory effective amount of the cyclohexanecarboxylic acid is from 300 to 1000 ppm in the flavored article. In some aspects, the olfactory effective amount of the cyclohexanecarboxylic acid is from 400 to 1000 ppm in the flavored article. In some aspects, the olfactory effective amount of the cyclohexanecarboxylic acid is from 500 to 1000 ppm in the flavored article. In some aspects, the olfactory effective amount of the cyclohexanecarboxylic acid is from 600 to 1000 ppm in the flavored article. In some aspects, the olfactory effective amount of the cyclohexanecarboxylic acid is from 700 to 1000 ppm in the flavored article. In some aspects, the olfactory effective amount of the cyclohexanecarboxylic acid is from 800 to 1000 ppm in the flavored article. In some aspects, the olfactory effective amount of the cyclohexanecarboxylic acid is from 900 to 1000 ppm in the flavored article.

In some aspects, the olfactory effective amount of the cyclohexanecarboxylic acid is 0.1, or 0.2, or 0.3, or 0.4, or 0.5, or 0.6, or 0.7, or 0.8, or 0.9, or 1, or 2, or 3, or 4, or 5, or 6, or 7, or 8, or 9, or 10, or 20, or 30, or 40, or 50, or 60, or 70, or 80, or 90, or 100, or 200, or 300, or 400, or 500, or 600, or 700, or 800, or 900, or 1000 ppm in the flavored article.

### The Cyclohexanecarboxylic Acid

In some aspects, the cyclohexanecarboxylic acid is a chlorogenic acid. As used herein, the term "chlorogenic acid" refers to phenolic acids found in plant materials. Chlorogenic acids may be classified by the identity, number, and position of the acyl residues on the quinic acid.

The cyclohexanecarboxylic acids of the present invention can be obtained commercially, synthesized according to procedures known in the art, for example, as described by Sefkow (Eur. J. Org. Chem. 2001, 1137-1141) or obtained from a variety of botanicals such as fruits (for example, apples, apricots, blackberries, blueberries, cherries, citrus fruits, peaches, pears, plums and strawberries), plant leaves (for example, blueberry. mate, stevia, or eucommia leaves), vegetables (for example, artichokes, Brussels sprouts, cabbages, carrots, eggplants, kales, peppers, potatoes and tomatoes) and other plants (for example, bamboos, coffee beans, honeysuckle flowers, sunflower seeds and yerba mate).

In some aspects, the cyclohexanecarboxylic acid is selected from the cyclohexanecarboxylic acids disclosed in International Patent Application Publication No. WO 2002/100192 A1.

In some aspects, the cyclohexanecarboxylic acid is selected from the cyclohexanecarboxylic acids disclosed in International Patent Application Publication No. WO 2016/209664 A1.

In some aspects, the cyclohexanecarboxylic acid is selected from the cyclohexanecarboxylic acids disclosed in U.S. Patent No. 6,632,459 B2.

In some aspects, the at least one cyclohexanecarboxylic acid is selected from the group consisting of 5-caffeoylquinic acid (5-CQA), 3-caffeoylquinic acid (3-CQA), 4-caffeoylquinic acid (4-CQA), 3,4-dicaffeoylquinic acid (3,4-diCQA), 3,5-dicaffeoylquinic acid (3,5-diCQA), 4,5-dicaffeoylquinic acid (4,5-diCQA), 3-feruloylquinic acid (3-FQA), 4-feruloylquinic acid (4-FQA), 5-feruloylquinic acid (5-FQA), 3-p-coumaroylquinic acid (3-p-CoQA), 4-p-coumaroylquinic acid (4-p-CoQA), 5-p-coumaroylquinic acid (3-p-CoQA), 3,4-caffeoylferuloylquinic acid (3,4-CFQA), 3,4-feruloylcaffeoylquinic acid (3,4-FCQA), 3,5-caffeoylferuloylquinic acid (3,5-CFQA), 3,5-feruloylcaffeoylquinic acid (3,4-FCQA), 4,5-caffeoylferuloylquinic acid (4,5-CFQA), 4,5-feruloylcaffeoylquinic acid (4,5-FCQA), and combinations thereof. In some aspects, the at least one cyclohexanecarboxylic acid may be in the form of a enantiomer, or a diastereoisomer, or a mixture thereof.

In some aspects, the at least one cyclohexanecarboxylic acid is 5-caffeoylquinic acid.

In some aspects, the at least one cyclohexanecarboxylic acid is purified from green coffee. Examples of methods to purify cyclohexanecarboxylic acid from green coffee, and compositions comprising cyclohexanecarboxylic acid extracted from green coffee are disclosed in Del Rio et al., Nutrients 2(8): 820-833 (2010).

### Flavored Articles

The at least one cyclohexanecarboxylic acid may be added directly to the flavored article. Alternatively, the at least one cyclohexanecarboxylic acid may be premixed with certain ingredients of the flavored article. For example, the at least one cyclohexanecarboxylic acid may be admixed with ingredients responsible for imparting a sour taste to the flavored article that may be thereafter added to the remaining ingredients of the flavored article.

A flavored article includes, for example, a food product (e.g., a beverage), a sweetener such as a natural sweetener or an artificial sweetener, a pharmaceutical composition, a dietary supplement, a nutraceutical, a dental hygienic composition and a cosmetic product. The flavored article may further contain a flavoring.

In some aspects, the flavored article is a food product including, for example, but not limited to, fruits, vegetables, juices, meat products such as ham, bacon and sausage, egg products, fruit concentrates, gelatins and gelatin-like products such as jams, jellies, preserves and the like, milk products such as ice cream, sour cream and sherbet, icings, syrups including molasses, corn, wheat, rye, soybean, oat, rice and barley products, nut meats and nut products, cakes, cookies, confectioneries such as candies, gums, fruit flavored drops, and chocolates, chewing gums, mints, creams, pies and breads.

In some aspects, the food product is a beverage including, for example, but not limited to, coffee, tea, carbonated soft drinks, such as COKE and PEPSI, non-carbonated soft drinks and other fruit drinks, sports drinks such as GATORADE and alcoholic beverages such as beers, wines and liquors.

A flavored article may also include prepared packaged products, such as granulated flavor mixes, which upon reconstitution with water provide non-carbonated drinks, instant pudding mixes, instant coffee and tea, coffee whiteners, malted milk mixes, pet foods, livestock feed, tobacco, and materials for baking applications, such as powdered baking mixes for the preparation of breads, cookies, cakes, pancakes, donuts and the like.

A flavored article may also include diet or low-calorie food and beverages containing little or no sucrose. Flavored articles may also include condiments such as herbs, spices and seasonings, flavor enhancers (e.g., monosodium glutamate), dietetic sweeteners and liquid sweeteners.

In some aspects, the flavored article is a pharmaceutical composition, a dietary supplement, a nutraceutical, a dental hygienic composition or a cosmetic product.

Dental hygiene compositions are known in the art and include, for example, but not limited to, a toothpaste, a mouthwash, a plaque rinse, a dental floss, a dental pain reliever (such as ANBESOL) and the like. In some aspects, the dental hygiene composition includes one natural sweetener. In some aspects, the dental hygiene composition includes more than one natural sweetener. In some aspects, the dental hygiene composition includes sucrose and corn syrup, or sucrose and aspartame.

In some aspects, a cosmetic product includes, for example, but not limited to, a face cream, a lipstick, a lip gloss and the like. Other suitable cosmetic products of use in this disclosure include a lip balm, such as CHAPSTICK or BURT'S BEESWAX Lip Balm.

The present invention is best illustrated but is not limited to the following examples.

### EXAMPLES

### Example 1

### Sensory Evaluation of Cyclohexanecarboxylic Acid as a Sourness Enhancer in a Model System

*A Model System Comprising Malic Acid:* A sucrose (5% by weight) and malic acid (0.05% by weight) solution was prepared and used for evaluating the sourness enhancement effect of a cyclohexanecarboxylic acid having the structure:

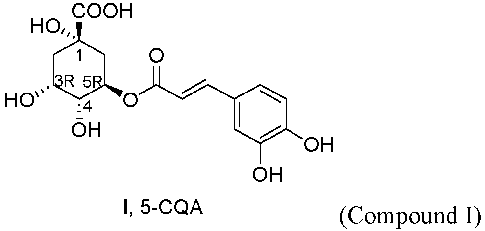

The evaluation consisted of (i) a test solution of 50 ppm of the cyclohexanecarboxylic acid in the sucrose/malic acid solution; and (ii) a control solution comprising the sucrose/malic acid solution only.

27 trained panelists were asked to evaluate the sweet, sour and astringent intensities for each sample on a linear scale from 0 to 10, where 0 corresponded to "no taste" and 10 corresponded to "too strong to taste". Without changing the sweet intensity and pH value of the samples, the sourness was increased from 4.0 (reference sample) to 4.9 (tested sample) at a 95% confidence level; at the same time, the astringency intensity was also increased from 2.5 (reference sample) to 3.1 (tested sample) at a 99% confidence level. These data indicates adding compound I at 50 ppm (by weight) enhances sourness intensity by 22.5% and astringency intensity by 24.0%.

In a repeat experiment using 41 trained subjects, 41 subjects were asked to select the more sour sample in each pair, in a paired comparison study (2-AFC). The pH of the samples was 3.1 (± 0.02). 28 out of 41 subjects found the sample containing compound I at 50 ppm was more sour at a 95% confidence level. These data also demonstrated the conclusion that compound I at 50 ppm (by weight) enhances sourness intensity.

*A Model System Comprising Tartaric Acid:* A sucrose (5% by weight) and tartaric acid (0.05% by weight) solution was prepared and used for evaluating the sourness enhancement effect of a cyclohexanecarboxylic acid having the structure:

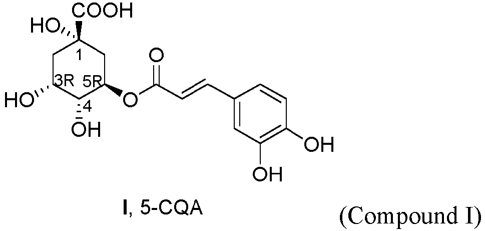

The evaluation consisted of (i) a test solution of 50 ppm of the cyclohexanecarboxylic acid in the sucrose/ tartaric acid solution; and (ii) a control solution comprising the sucrose/ tartaric acid solution only.

41 subjects were asked to select out more sour sample in each pair. The pH of the samples was 2.9 (± 0.02). 28 out of 41 subjects found that adding compound I at 50 ppm increased sourness at a 95% confidence level. This result indicates that compound I at 50 ppm (by weight) enhances sourness intensity in a model system comprising tartaric acid.

*A Model System Comprising Citric and Lactic Acid:* A sucrose (5% by weight), citric acid (0.07% by weight), and lactic acid (0.09% by weight) solution was prepared and used for evaluating the sourness enhancement effect of a cyclohexanecarboxylic acid having the structure:

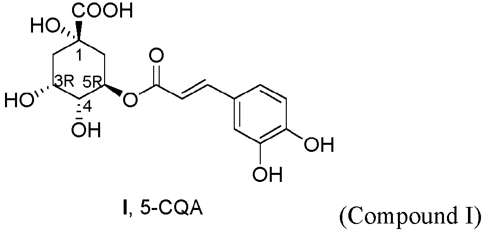

The evaluation consisted of (i) a test solution of 50 ppm of the cyclohexanecarboxylic acid in the sucrose/ citric-lactic acid solution; and (ii) a control solution comprising the sucrose/ citric-lactic acid solution only.

41 subjects were asked to select out more sour sample in each pair. The pH of the samples was 2.9 (± 0.02). 29 out of 41 subjects found that adding compound I at 50 ppm increased sourness at a 95% confidence level. This result indicates that compound I at 50 ppm (by weight) enhances sourness intensity in a model system comprising a mixture of citric and lactic acid.

*A Model System Comprising Citric Acid:* A sucrose (5% by weight), and citric acid (0.05% by weight) solution was prepared and used for evaluating the sourness enhancement effect of a cyclohexanecarboxylic acid having the structure:

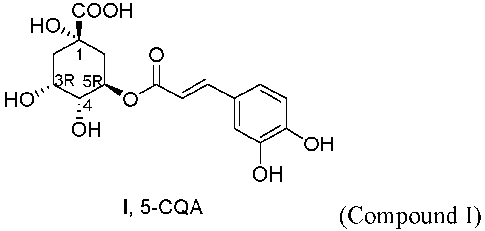

The evaluation consisted of (i) a test solution of 50 ppm of the cyclohexanecarboxylic acid in the sucrose/ citric acid solution; and (ii) a control solution comprising the sucrose/ citric acid solution only.

28 trained panelists were asked to evaluate the sweet, sour and astringent intensities for each sample on a linear scale from 0 to 10, where 0 correlated with "no taste" and 10 correlated with "too strong to taste". Without changing the sourness intensity and pH value of the samples, the sweetness intensity was decreased from 4.3 (reference sample) to 3.8 (tested sample) at a 95% confidence level; at the same time, the astringency intensity was also increased from 2.5 (reference sample) to 3.2 (tested sample). These data indicate that adding compound I at 50 ppm (by weight) decreases sweetness intensity by 11.6% and astringency intensity by 28.0%.

Although the various aspects of the invention have been illustrated above by reference to examples and preferred embodiments, it will be appreciated that the scope of the invention is defined not by the foregoing description but by the following claims properly construed under principles of patent law.

## Claims

1. A method,
wherein the method enhances the sourness of a flavored article;
wherein the method comprises the step of adding a plant extract selected from the group consisting of green coffee bean extract, honeysuckle flower extract, and eucommia bark extract to the flavored article;
wherein the flavored article contains at least one acid selected from the group consisting of: malic acid, tartaric acid, citric acid, and lactic acid, wherein the amount of the at least one acid in the flavored article is from 0.02% to 0.1% by weight,
wherein the plant extract contains at least one cyclohexanecarboxylic acid;
wherein the plant extract is added in an amount sufficient to result in an olfactory effective amount of at least one cyclohexanecarboxylic acid in the flavored article, and wherein the olfactory effective amount of the at least one cyclohexanecarboxylic acid is from 0.1 to 1000 ppm in the flavored article.

2. The method of claim 1, wherein the at least one cyclohexanecarboxylic acid is selected from the group consisting of 5-caffeoylquinic acid (5-CQA), 3-caffeoylquinic acid (3-CQA), 4-caffeoylquinic acid (4-CQA), 3,4-dicaffeoylquinic acid (3,4-diCQA), 3,5-dicaffeoylquinic acid (3,5-diCQA), 4,5-dicaffeoylquinic acid (4,5-diCQA), 3-feruloylquinic acid (3-FQA), 4-feruloylquinic acid (4-FQA), 5-feruloylquinic acid (5-FQA), 3-p-coumaroylquinic acid (3-p-CoQA), 4-p-coumaroylquinic acid (4-p-CoQA), 5-p-coumaroylquinic acid (3-p-CoQA), 3,4-caffeoylferuloylquinic acid (3,4-CFQA), 3,4-feruloylcaffeoylquinic acid (3,4-FCQA), 3,5-caffeoylferuloylquinic acid (3,5-CFQA), 3,5-feruloylcaffeoylquinic acid (3,4-FCQA), 4,5-caffeoylferuloylquinic acid (4,5-CFQA), 4,5-feruloylcaffeoylquinic acid (4,5-FCQA), and combinations thereof.

3. The method of any of the previous claims, wherein the at least one cyclohexanecarboxylic acid is 5-caffeoylquinic acid.

4. Use of a cyclohexanecarboxylic acid to
enhance the sourness of a flavored article;
wherein the use comprises the step of adding an olfactory effective amount of at least one cyclohexanecarboxylic acid to the flavored article; and
wherein the flavored article contains at least one acid selected from the group consisting of: malic acid, tartaric acid, citric acid, and lactic acid,
wherein the amount of the at least one acid in the flavored article is from 0.02% to 0.1 % by weight, and
wherein the olfactory effective amount of the at least one cyclohexanecarboxylic acid is from 0.1 to 1000 ppm in the flavored article.

5. Use of claim 4, wherein the at least one cyclohexanecarboxylic acid is selected from the group consisting of 5-caffeoylquinic acid (5-CQA), 3-caffeoylquinic acid (3-CQA), 4-caffeoylquinic acid (4-CQA), 3,4-dicaffeoylquinic acid (3,4-diCQA), 3,5-dicaffeoylquinic acid (3,5-diCQA), 4,5-dicaffeoylquinic acid (4,5-diCQA), 3-feruloylquinic acid (3-FQA), 4-feruloylquinic acid (4-FQA), 5-feruloylquinic acid (5-FQA), 3-p-coumaroylquinic acid (3-p-CoQA), 4-p-coumaroylquinic acid (4-p-CoQA), 5-p-coumaroylquinic acid (3-p-CoQA), 3,4-caffeoylferuloylquinic acid (3,4-CFQA), 3,4-feruloylcaffeoylquinic acid (3,4-FCQA), 3,5-caffeoylferuloylquinic acid (3,5-CFQA), 3,5-feruloylcaffeoylquinic acid (3,4-FCQA), 4,5-caffeoylferuloylquinic acid (4,5-CFQA), 4,5-feruloylcaffeoylquinic acid (4,5-FCQA), and combinations thereof.

6. Use of claim 4 or 5, wherein the at least one cyclohexanecarboxylic acid is 5-caffeoylquinic acid.

## Patentansprüche

1. Verfahren,
wobei das Verfahren die Säure eines aromatisierten Produkts verstärkt;
wobei das Verfahren den Schritt des Zugebens eines Pflanzenextrakts, das aus der Gruppe bestehend aus Grünkaffeebohnenextrakt, Geißblattblütenextrakt und Eucommia-Rindenextrakt ausgewählt ist, zu dem aromatisierten Produkt umfasst;
wobei das aromatisierte Produkt mindestens eine Säure enthält, die aus der Gruppe bestehend aus Äpfelsäure, Weinsäure, Citronensäure und Milchsäure ausgewählt ist, wobei die Menge der mindestens einen Säure in dem aromatisierten Produkt 0,02 bis 0,1 Gew.-% beträgt,
wobei der Pflanzenextrakt mindestens eine Cyclohexancarbonsäure enthält;
wobei der Pflanzenextrakt in einer Menge zugegeben wird, die ausreicht, um zu einer olfaktorisch wirksamen Menge mindestens einer Cyclohexancarbonsäure in dem aromatisierten Produkt zu führen, und wobei die olfaktorisch wirksame Menge der mindestens einen Cyclohexancarbonsäure 0,1 bis 1000 ppm in dem aromatisierten Produkt beträgt.

2. Verfahren nach Anspruch 1, wobei die mindestens eine Cyclohexancarbonsäure aus der Gruppe bestehend aus 5-Caffeoylchinasäure (5-CQA), 3-Caffeoylchinasäure (3-CQA), 4-Caffeoylchinasäure (4-CQA), 3,4-Dicaffeoylchinasäure (3,4-diCQA), 3,5-Dicaffeoylchinasäure (3,5-diCQA), 4,5-Dicaffeoylchinasäure (4,5-diCQA), 3-Feruloylchinasäure (3-FQA), 4-Feruloylchinasäure (4-FQA), 5-Feruloylchinasäure (5-FQA), 3-p-Cumaroylchinasäure (3-p-CoQA), 4-p-Cumaroylchinasäure (4-p-CoQA), 5-p-Cumaroylchinasäure (3-p-CoQA), 3,4-Caffeoylferuloylchinasäure (3,4-CFQA), 3,4-Feruloylcaffeoylchinasäure (3,4-FCQA), 3,5-Caffeoylferuloylchinasäure (3,5-CFQA), 3,5-Feruloylcaffeoylchinasäure (3,4-FCQA), 4,5-Caffeoylferuloylchinasäure (4,5-CFQA), 4,5-Feruloylcaffeoylchinasäure (4,5-FCQA) und Kombinationen davon ausgewählt ist.

3. Verfahren nach einem der vorhergehenden Ansprüche, wobei die mindestens eine Cyclohexancarbonsäure 5-Caffeoylchinasäure ist.

4. Verwendung einer Cyclohexancarbonsäure zur Verstärkung der Säure eines aromatisierten Produkts; wobei die Verwendung den Schritt des Zugebens einer olfaktorisch wirksamen Menge mindestens einer Cyclohexancarbonsäure zu dem aromatisierten Produkt umfasst und
wobei das aromatisierte Produkt mindestens eine Säure enthält, die aus der Gruppe bestehend aus Äpfelsäure, Weinsäure, Citronensäure und Milchsäure ausgewählt ist,
wobei die Menge der mindestens einen Säure in dem aromatisierten Produkt 0,02 bis 0,1 Gew.-% beträgt und
wobei die olfaktorisch wirksame Menge der mindestens einen Cyclohexancarbonsäure 0,1 bis 1000 ppm in dem aromatisierten Produkt beträgt.

5. Verwendung nach Anspruch 4, wobei die mindestens eine Cyclohexancarbonsäure aus der Gruppe bestehend aus 5-Caffeoylchinasäure (5-CQA), 3-Caffeoylchinasäure (3-CQA), 4-Caffeoylchinasäure (4-CQA), 3,4-Dicaffeoylchinasäure (3,4-diCQA), 3,5-Dicaffeoylchinasäure (3,5-diCQA), 4,5-Dicaffeoylchinasäure (4,5-diCQA), 3-Feruloylchinasäure (3-FQA), 4-Feruloylchinasäure (4-FQA), 5-Feruloylchinasäure (5-FQA), 3-p-Cumaroylchinasäure (3-p-CoQA), 4-p-Cumaroylchinasäure (4-p-CoQA), 5-p-Cumaroylchinasäure (3-p-CoQA), 3,4-Caffeoylferuloylchinasäure (3,4-CFQA), 3,4-Feruloylcaffeoylchinasäure (3,4-FCQA), 3,5-Caffeoylferuloylchinasäure (3,5-CFQA), 3,5-Feruloylcaffeoylchinasäure (3,4-FCQA), 4,5-Caffeoylferuloylchinasäure (4,5-CFQA), 4,5-Feruloylcaffeoylchinasäure (4,5-FCQA) und Kombinationen davon ausgewählt ist.

6. Verwendung nach Anspruch 4 oder 5, wobei die mindestens eine Cyclohexancarbonsäure 5-Caffeoylchinasäure ist.

## Revendications

1. Procédé,
le procédé augmentant l'aigreur d'un article aromatisé ; dans lequel le procédé comprend l'étape d'ajout d'un extrait végétal choisi dans le groupe constitué par un extrait de grain de café vert, un extrait de fleur de chèvrefeuille et un extrait d'écorce d'eucommia à l'article aromatisé ;
dans lequel l'article aromatisé contient au moins un acide choisi dans le groupe constitué par : l'acide malique, l'acide tartrique, l'acide citrique et l'acide lactique, la quantité de l'au moins un acide dans l'article aromatisé étant de 0,02 % à 0,1 % en poids,
dans lequel l'extrait végétal contient au moins un acide cyclohexanecarboxylique ;
dans lequel l'extrait végétal est ajouté en une quantité suffisante pour obtenir une quantité efficace sur le plan olfactif d'au moins un acide cyclohexanecarboxylique dans l'article aromatisé, et dans lequel la quantité efficace sur le plan olfactif de l'au moins un acide cyclohexanecarboxylique est de 0,1 à 1 000 ppm dans l'article aromatisé.

2. Procédé selon la revendication 1, dans lequel l'au moins un acide cyclohexanecarboxylique est choisi dans le groupe constitué par l'acide 5-caféoylquinique (5-CQA), l'acide 3-caféoylquinique (3-CQA), l'acide 4-caféoylquinique (4-CQA), l'acide 3,4-dicaféoylquinique (3,4-diCQA), l'acide 3,5-dicaféoylquinique (3,5-diCQA), l'acide 4,5-dicaféoylquinique (4,5-diCQA), l'acide 3-féruloylquinique (3-FQA), l'acide 4-féruloylquinique (4-FQA), l'acide 5-féruloylquinique (5-FQA), l'acide 3-p-coumaroylquinique (3-p-CoQA), l'acide 4-p-coumaroylquinique (4-p-CoQA), l'acide 5-p-coumaroylquinique (3-p-CoQA), l'acide 3,4-caféoylféruloylquinique (3,4-CFQA), l'acide 3,4-féruloylcaféoylquinique (3,4-FCQA), l'acide 3,5-caféoylféruloylquinique (3,5-CFQA), l'acide 3,5-féruloylcaféoylquinique (3,4-FCQA), l'acide 4,5-caféoylféruloylquinique (4,5-CFQA), l'acide 4,5-féruloylcaféoylquinique (4,5-FCQA), et leurs combinaisons.

3. Procédé selon l'une quelconque des revendications précédentes, dans lequel le au moins un acide cyclohexanecarboxylique est l'acide 5-caféoylquinique.

4. Utilisation d'un acide cyclohexanecarboxylique pour améliorer l'aigreur d'un article aromatisé ;
l'utilisation comprenant l'étape d'ajout d'une quantité efficace sur le plan olfactif d'au moins un acide cyclohexanecarboxylique à l'article aromatisé ; et
l'article aromatisé contenant au moins un acide choisi dans le groupe constitué par : l'acide malique, l'acide tartrique, l'acide citrique et l'acide lactique,
la quantité de l'au moins un acide dans l'article aromatisé étant de 0,02 % à 0,1 % en poids, et
la quantité efficace sur le plan olfactif de l'au moins un acide cyclohexanecarboxylique étant de 0,1 à 1 000 ppm dans l'article aromatisé.

5. Utilisation selon la revendication 4, dans laquelle l'au moins un acide cyclohexanecarboxylique est choisi dans le groupe constitué par l'acide 5-caféoylquinique (5-CQA), l'acide 3-caféoylquinique (3-CQA), l'acide 4-caféoylquinique (4-CQA), l'acide 3,4-dicaféoylquinique (3,4-diCQA), l'acide 3,5-dicaféoylquinique (3,5-diCQA), l'acide 4,5-dicaféoylquinique (4,5-diCQA), l'acide 3-féruloylquinique (3-FQA), l'acide 4-féruloylquinique (4-FQA), l'acide 5-féruloylquinique (5-FQA), l'acide 3-p-coumaroylquinique (3-p-CoQA), l'acide 4-p-coumaroylquinique (4-p-CoQA), l'acide 5-p-coumaroylquinique (3-p-CoQA), l'acide 3,4-caféoylféruloylquinique (3,4-CFQA), l'acide 3,4-féruloylcaféoylquinique (3,4-FCQA), l'acide 3,5-caféoylféruloylquinique (3,5-CFQA), l'acide 3,5-féruloylcaféoylquinique (3,4-FCQA), l'acide 4,5-caféoylféruloylquinique (4,5-CFQA), l'acide 4,5-féruloylcaféoylquinique (4,5-FCQA), et leurs combinaisons.

6. Utilisation selon la revendication 4 ou 5, dans laquelle l'au moins un acide cyclohexanecarboxylique est l'acide 5-caféoylquinique.
